# EUROPÄISCHE PATENTSCHRIFT

(11) **EP 2 499 375 B1**
(45) Veröffentlichungstag und Bekanntmachung des Hinweises auf die Patenterteilung: **13.01.2016**
(21) Anmeldenummer: 10782225.6
(22) Anmeldetag: 10.11.2010
(51) Int. Cl.: F04D 7/04, F04D 29/44, F04D 31/00, B01D 45/06

(54) **ZWISCHENBODEN FÜR EINE RADIALTURBOMASCHINE**
INTERMEDIATE FLOOR FOR A RADIAL TURBINE ENGINE
FOND INTERMÉDIAIRE POUR UNE TURBOMACHINE RADIALE

(30) Priorität: 11.11.2009 DE 102009052619
(43) Veröffentlichungstag der Anmeldung: 19.09.2012
(73) Patentinhaber: Siemens Aktiengesellschaft, 80333 München (DE)
(72) Erfinder: JONEN, Werner, 47051 Duisburg (DE); ROBENS, Peter, 47447 Moers (DE)
(86) Internationale Anmeldenummer: PCT/EP2010/067174
(87) Internationale Veröffentlichungsnummer: WO 2011/058034

(56) Entgegenhaltungen:
- FR-A- 1 326 166
- FR-A1- 2 574 871
- FR-A1- 2 774 137
- US-A- 2 332 614

## Beschreibung

Die Erfindung betrifft eine Radialturbomaschine mit einem Radialdiffusorkanal mit einem Zwischenboden, dessen Hauptdurchströmungsrichtung radial von innen nach außen verläuft, einem Umlenkkanal, der stromab des Radialdiffusorkanals an diesen anschließt und dessen Hauptdurchströmungsrichtung von radial nach außen nach radial nach innen umgelenkt ist, und einem Rückführkanal, der stromab des Umlenkkanals an diesen anschließt und dessen Hauptdurchströmungsrichtung radial von außen nach innen verläuft, wobei der Zwischenboden einen ersten Außenoberflächenabschnitt aufweist, der konvex geformt ist den Umlenkkanal zu begrenzen, wobei in dem Zwischenboden mindestens ein Verbrauchsgasabführkanal vorgesehen ist, der in den Umlenkkanal mündet, so dass, wenn die Hauptdurchströmung im Umlenkkanal feste oder flüssige Teilchen aufweist, durch den Verbrauchsgasabführkanal Verbrauchsgas als teilchenarmes Gas einer Hauptdurchströmung von dieser abführbar ist.

Eine Radialturbomaschine ist beispielsweise ein mehrstufiger Einwellen-Radialverdichter, dessen Binzelstufen als Komponenten zur Strömungsführung von Prozeßgas ein Laufrad, das von einer Welle angetrieben wird, einen Radialdiffusor, einen Umlenkkanal, sowie einen Rückführkanal aufweisen. Das Prozeßgas durchströmt zunächst das Laufrad, wobei das Prozeßgas in Axialrichtung in das Laufrad eintritt und in Radialrichtung nach außen aus dem Laufrad austritt. Eine Erhöhung des statischen Drucks erfolgt in dem Diffusor, der sich radial an das Laufrad anschließt und von dem Prozessgas von innen nach außen durchströmt wird. In dem mehrstufigen Radialverdichter durchströmt das Prozeßgas eine Vielzahl von Radialverdichterstufen, die axial hintereinander auf der Welle angeordnet sind und jeweils das Laufrad und den Diffusor aufweiten. Ferner wird in jeder der Radialverdichterstufen die Gasströmung nach dem Diffusor radial in Richtung zur Welle zurückgeführt, um in das Laufrad einer nachfolgenden Radialverdichterstufe einzutreten. Die Rückführung wird mit einem Umlenkkanal bewerkstelligt, der die Prozeßgasströmungsrichtung von radial nach außen nach radial nach innen umlenkt. An den Umlenkkanal schließt sich stromabwärts ein Rückführkanal an, der sich in Radialrichtung erstreckt, um die Prozeßgasströmung dem Eintritt des stromab angeordneten Laufrads zuzuführen. Nach dem Durchströmen der letzten Radialverdichterstufe strömt das Prozeßgas in ein Spiralgehäuse, das sich an die letzte Radialverdichteratufe anschließt und an das ein Radialverdichterstutzen angeschlossen ist, durch den das Prozeßgas abströmt. Es ist bekannt, einen Teil des Prozeßgases aus der Hauptströmung abzuführen, um Kühlgas beispielsweise zum Kühlen eines Motors oder zum Kühlen von Magnetlagern zu gewinnen.

Das Entnehmen des Teilgasstroms aus der Hauptströmung des Prozessgases hat jedoch unter anderem den Nachteil, dass in vielen Fällen die Qualität des Teilgasstroms hinsichtlich den Reinheitsanforderungen, ungenügend ist, da der Teilgasstrom beispielsweise einen zu hohen Feuchtigkeitsgehalt hat. Dies kann zu einer Beschädigung der von dem Teilgasstrom kontaktierten Bauteile führen, wodurch die Wartungszyklen des Radialturboverdichters kurz sind.

Aus der FR 1 326 166 A ist eine Grenmachichtabsaugung für einen gattungsgemäßen Verdichter bekannt, welche prinzipiell geeignet ist, sauberes Prozessgas abzusaugen.

Aufgabe der Erfindung ist, eine Radialturbomaschine, die den Zwischenboden aufweist, zu schaffen, wobei die Radialturbomaschine sicher betreibbar ist.

Erfindungsgemäß wird eine Radialturbomaschine mit einem ein Zwischenboden geschaffen, bei der die Radielturbomaaehine einen Rückführkanal und ein Innengehäuse aufweist, das derart geformt und angeordnet ist, dass das Innengehäuse zusammen mit dem dritten Außenoberflachenabschnitt des Zwischenbodens den Rückführkanal bildet, wobei in dem Rückführkanal mindestens eine Leitschaufel angeordnet ist, die den Rückführkanal überbrückt und in der der Verbrauchagasabführkanal von dem Zwischenboden zu dem Inneugehäuse geführt ist.

Die Erfindung ermöglicht vorteilhaft bei einer Radialturbomaschine, den trockenen und sauberen Teilgasstrom aus dem gegebenenfalls partikel- und/oder wassertropfenbeladenen Prozeßgasstrom im Ringraum einer Radialdiffunorstufe der Radialturbomaschine zu entnehmen. Dies wird erfindungsgemäß insbesondere aufgrund der konvexen Form des ersten Außenoberflächenabschnitts des Zwischenbodens und aufgrund der erfindungsgemäßen besonderen Anordnung des Umlenkkanals und dessen Mündung erreicht. Die Erfindung beruht auf den Gedanken, die Entnahmestelle für den Teilgasstrom in dem Umlenkkanal im Bereich höchster Strömungsumlenkung, d.h. im inneren Bogen des Umlenkkanals vorzusehen. Feste oder flüssige Teilchen, beispielsweise schmutzpartikel oder Wassertröpfchen, können der Umlenkung der Gasströmung aufgrund ihrer Trägheit nicht im vollen Maße folgen.

Gemäß einer Ausführungsform der Erfindung begrenzt der Zwischenboden mit einem zweiten Außenoberflächenabschnitt den Radialdiffusorkanal und mit einem dritten Außenoberflächenabschnitt den Rückführkanal, wobei der erste Außenoberflächenabschnitt bezogen auf die Hauptdurchströmungsrichtung zwischen dem zweiten und dem dritten Außenoberflächenabschnitt angeordnet ist. Bei dieser Ausführungsform der Erfindung können vorteilhaft die innern Begrenzungen des Radialdiffusorkanals, des Umlenkkanals und des Rückführkanals von dem Zwischenboden als ein einstückiges Teil bereitgestellt werden, in dem der Mündungsabschnitt sowie ein sich an den Mündungsabschnitt anschließender Abschnitt des Verbrauchsgasabführkanals integral angeordnet sind.

Gemäß einer Ausführungsform der Erfindung mündet der Verbrauchsgasabführkanal in den Umlenkkanal im Bereich des Übergangs zwischen dem ersten Außenoberflächenabschnitt und dem dritten Außenoberflächenabschnitt. Bei dieser Ausführungsform ist vorteilhaft besonders effektiv das Verbrauchsgas als teilchenarmes Gas der Hauptdurchströmung von dieser durch den Verbrauchsgasabführkanal abführbar. Es wird vorteilhaft ausgenutzt, dass im Betrieb die Prozessgasströmung in der Nähe des Rückführkanals um bereits einen großen Umlenkwinkel umgelenkt wurde, so dass besonders wenige feste oder flüssige Teilchen in die Nähe der Mündung des Verbrauchagasabführkanals kommen, da die festen oder flüssigen Teilchen der Umlenkung der Gasströmung nicht in vollem Maße folgen konnten. Ein weiterer Vorteil ist, dass, wenn der Zwischenboden in einer Radialturbomaschine mit senkrechter Rotationsachse und mit von oben nach unten verlaufender Hauptströmungsrichtung verwendet wird, die festen oder flüssigen Teilchen aufgrund der Schwerkraft sich von der Mündung des Verbrauchsgasabführkanals entfernen bzw. die Mündung nicht erreichen, wodurch die Reinheit des Verbrauchagases verbessert ist.

Hevorzugtermaßen verläuft der Verbrauchsgasabführkanal in dem Zwischenboden in einer Ebene, in der die Achse des Zwischenbodens liegt. Ferner ist der Verbrauchsgasabführkanal zur Achse des Zwischenbodens zum dritten Außenoberflächenabschnitt hin geneigt angeordnet. Bei dieser Ausführungsform trägt, wenn der Zwischenboden in die Radialturbomaschine mit vertikaler Rotationsachse eingebaut ist, die Neigung des Verbrauchsgasabführkanals vorteilhaft dazu bei, dass weniger feste oder flüssige Teilchen mit dem Verbrauchsgas durch den Verbrauchsgasabführkanal abgeführt werden, wodurch die Verbrauchagazqualität weiter verbessert wird.

Nach einer Ausführungsform der erfindungsgemäßen Radialturbomaschine weist die Radialturbomaschine den Rückführkanal und ein Innengehäuse auf, das derart geformt und angeordnet ist, dass das Innengehäuse zusammen mit dem dritten Außenoberflächenabschnitt des Zwischenbodens den Rückführkanal bildet. Ferner ist in dem Rückführkanal mindestens eine Leitschaufel angeordnet, die den Rückführkanal überbrückt und in der der Verbrauchsgasabführkanal von dem Zwischenboden zu dem Innengehäuse geführt ist. Bei dieser Ausführungsform entfällt vorteilhaft die Notwendigkeit, in dem Rückführkanal eine den Rückführkanal überbrückende separate Rohrleitung für die Strömungsführung des Verbrauchsgases aus der Radialdiffusorstufe vorzusehen.

Ferner kann gemäß einer Ausführungsform der Verbrauchsgasabführkanal sich in der Leitschaufel in Axialrichtung erstrecken. Nach einer Weiterbildung dieser Ausführungsform ist der Verbrauchsgasabführkanal auf der Schaufelsehne und im Bereich höchster Profildicke der Leitschaufel angeordnet. Somit kann vorteilhaft der Verbrauchsgasabführkanal einen großen Durchmesser aufweisen, womit die Durchflussrate des abgeführten Verbrauchsgases vorteilhaft erhöht werden kann.

Ferner ist nach einer Ausführungsform der Erfindung in jeder Leitschaufel und dazugehörig in dem Zwischenboden der verbrauchsgasabführkanal vorgesehen. Bei dieser Ausführungsform kann die Durchfiussrate des Verbrauchsgases vorteilhaft weiter erhöht sein.

Im Folgenden wird eine bevorzugte Ausführungsform eines erfindungsgemäßen Zwischenbodens und einer erfindungsgemäßen Radialverdichterstufe anhand der beigefügten schematischen Zeichnung erläutern. Es zeigt;

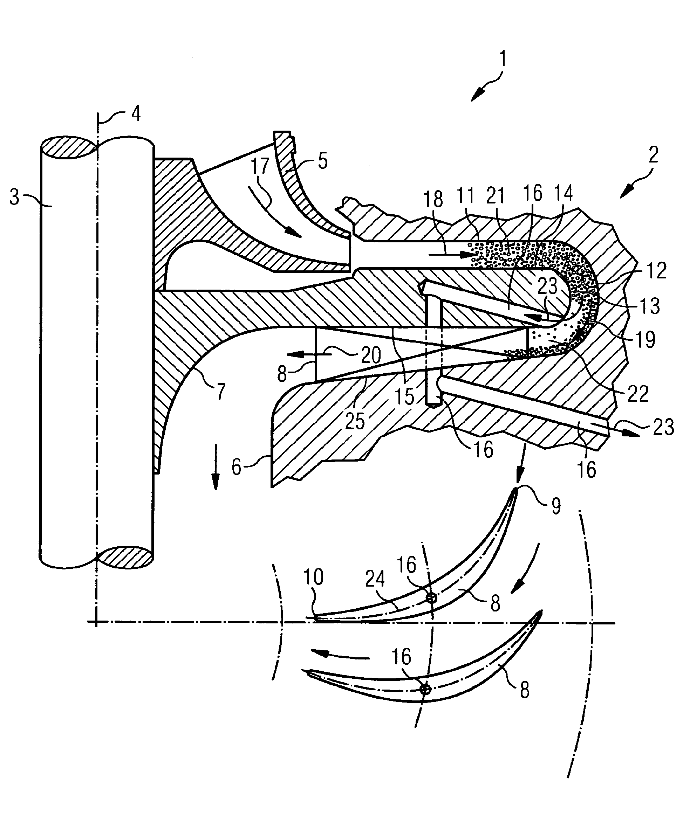

Figur 1 eine Teilschnittansicht einer Radialverdichterstufe eines erfindungegemaßen Radialverdichters mit vertikaler Rotationsachse und mit einem erfindungsgemäßen zwischenboden, sowie Schnittansichten von Leitschaufeln der Radialvordichterstufe gemäß einem Ausführungsbeispiel der Erfindung.

In Figur 1 wird schematisch eine Radialverdichterstufe 2 eines erfindungsgemäßen Radialverdichters 1 nach einem Ausführungsbeispiel der Erfindung gezeigt, wobei die Radialverdichterstufe 2 den erfindungsgemäßen Zwischenboden 7 aufweist. Ferner werden schematische Schnittansichten von Leitschaufeln 8 der Radialverdichterstufe 2 gezeigt. Der in Figur 1 gezeigte Radialverdichter 1 weist ein Innengehäuse 6 auf, in dem ein Radialverdichterlaufrad 5 angeordnet ist, das auf einer Welle 3 sitzt und von dieser angetrieben wird. Durch das Radialverdichterlaufrad 5 wird das Prozessgas radial nach außen umgelenkt. Die Richtung der Hauptströmung 17 im Radial verdichterlaufrad 5 ist in Figur 1 mit einem Pfeil angedeutet. An das Radialverdichterlaufrad 5 schließen sich stromabwärts ein Radialdiffusorkanal 11, ein Umlenkkanal 12, sowie ein Rückführkanal 25 an. Es sind die Hauptströmung 18 im Radialdiffusorkanal 11, die Hauptströmung 19 im Umlenkkanal 12, sowie die Hauptströmung 20 im Rückführkanal 20 jeweils durch Pfeile angedeutet.

In dem Innengehäuse 6 ist ferner ein Zwischenboden 7 angeordnet, der einen ersten Außenoberflächenbschnitt 13, einen zweiten Außenoberflächenabschnitt 14, und einen dritten Außenaberflächenabschnitt 15 hat. Der Zwischenboden 7 bildet mit den Außenoberflachenabschnitten 13, 14, 15 Innenwände des Radialdiffunorkanals 11, des Umlenkkanals 12, und des Rückführkanal 25. Eine jeweils gegenüberliegende Innenrand wird von dem Innengehäuse 6 gebildet. Somit werden die Breite und Form der Strömungskanäle 11, 12, 25 jeweils durch die Form des Innengehäuses 6 als auch durch die Form und Anordnung des Zwischenbodens 7 bestimmt. Gemäß Figur 1 verlaufen der zweite Außenoberflächenabschnitt 14 und der dritte Außenoberflächenabschnitt 15 im Querschnitt im Wesentlichen gerade, wohingegen der erste Außenoberflächenabschnitt 13 konvex geformt ist. Der umlenkkanal 12 lenkt die Gasströmung um 180° um, um das Prozessgas dem stromabwärts gelegenen nächsten Radialverdichterlaufrad 5 zuzuführen.

Der Zwischenboden 7 des Ausführungsbeispiels aus Figur 1 ist als ein rotationssymmetrisches, einstückiges Bauteil ausgebildet, durch welches die Welle 3 des Radialverdichters 1 durchgeführt ist. Der Zwischenboden 7 weist in seinem Inneren einen Verbrauchsgasabführkanal 16 auf, der an der Oberfläche des Zwischenbodens 7 im Bereich des ersten Außeenoberflächenabschnitts 13, d.h. im konvexen Teil des Zwischenbodens 7 mündet. Dabei ist der Verbrauchsgasabführkanal 16 geneigt und mündet in den hinteren Teil des Umlenkkanals 12 in die Prozeusgasströmung. Der Verbrauchsgasabführkanal 16 ist dafür vorgesehen, von der Prozessgasströmung durch die Radialverdichterstufe 2 einen Teilgasstrom abzuführen. Dies wird in Figur 1 durch Pfeile dargestellt.

Da gemäß der Erfindung der Verbrauchsgasabführkanal 16 im konvexen ersten Außenoberflächenabschnitt 13 mündet, kann ein sauberer und trockener Teilgasstrom aus der Hauptdurchströmung des Prozeungases abgezweigt werden. Wie in Figur 1 gezeigt ist, sind in der Prozessgasströmung enthaltene Anteile aus Wassertröpfchen 21 bzw. aus Partikeln, die eine höhere Dichte haben als das Prozessgas, radial nach außen gewandert, näher zu der von dem Innengehäuse 6 gebildeten Innenrand des Umlenkkanals 12 hin. Es hat sich eine tröpfchenarme Zone 22 im Umlenkkanal 12 im Bereich nahe der Mündung des verbrauchagasabführkanals 16 gebildet, so dass weniger feste oder flüssige Partikel in den Verbrauchsgasabführkanal 16 hinein gelangen können und somit ein an festen oder flüssigen Teilchen armer Teilgasstrom in den Verbrauchsgasabführkanal 16 hineinströmt.

Bei der in Figur 1 gezeigten Ausführungsform sind in dem Rückführkanal 25 Leitschaufeln 8 angeordnet, die der Prozessgasströmung den Drall entziehen. Bei dem in Figur 1 gezeigten Ausführungsbeispiel erstrecken sich die Leitschaufeln 8 über einen großen Bereich in Strömungsrichtung in dem Rückführkanal 25. In Figur 1 ist ferner die Anordnung der Leitschaufeln 8 in einem Axialschnitt beispielhaft anhand von Leitschaufeln 8, die in Querschnittsdarstellung gezeichnet sind, gezeigt. Die Leitschaufeln 8 weisen jeweils eine Vorderkante 9 und eine Hinterkante 10 auf und sind aerodynamisch geformt und angeordnet zum Umlenken der Strömung, wie in der entsprechenden Querschnittsdarstellung in Figur 1 gezeigt wird. Ferner bilden die Leitschaufel 8 eine mechanische Verbindung zwischen dem Innengehäuse 6 und dem Zwischenboden 7.

Um das an dem ersten Außenoberflächenabschnitt 13 in den geneigten Verbrauchsgasabführkanal 16 eingeströmta Gas weiterzuleiten, beilspielsweise zur Verwendung als Kühlgas für einen Motor, ist ein den Rückführkanal 25 überbrückender Abschnitt des Verbrauchsgasabführkanals 16 zwischen dem Zwischenboden 7 und dem Innengehäuse 6 vorgesehen, an welchen Abschnitt sich ein im Innengehäuse 6 verlaufender sowie parallel zum Verbrauchsgasabführkanalabechnitt 16 im Zwischenboden 7 verlaufender und geneigter Abschnitt des Verbrauchsgasabführkanals 16 anschließt, um den Verbrauchsgasstrom 23 aus der Radialverdichterstufe 2 abzuführen.

Der Abschnitt des Verbrauchagasabführkanals 16, der zwischen Innengehäuse 6 und Zwischenboden 7 verläuft, ist in den Leitschaufeln 8 angeordnet, wie dies in den Querschnittsdaratellungen der Leitschaufeln 8 in Figur 1 gezeigt wird. Dabei verläuft der Verbrauchsgasabführkanal 16 durch die Sehne 24 der Leitschaufel 8 im Bereich ihres dicksten Profildurchmessers.

Es können einer oder mehrere geneigte Verbrauchsgasabführkanäle 16 vorgesehen sein, die jeweils eine Mündung am ersten Außenoberflächenabschnitt 13 des Zwischenboden 7 haben und jeweils durch eine Leitschaufel 8 verlaufen. Zwar wird gemäß dem Ausführungsbeisplel aus Figur 1 die Erfindung anhand eines Radialverdichters erklärt. Die Erfindung kann jedoch auch auf eine Radialpumpe angewendet werden.

## Patentansprüche

1. Radialturbomaschine (1) mit einem Radialdiffusorkanal (11) mit einem Zwischenboden (7), dessen Hauptdurchströmungsrichtung (18) radial von innen nach außen verläuft, einem Umlenkkanal (12), der stromab des Radialdiffusorkanals (11) an diesen anschließt und dessen Hauptdurchströmungsrichtung (19) von radial nach außen nach radial nach innen umgelenkt ist, und einem Rückführkanal (25), der stromab des Umlenkkanals (12) an diesen anschließt und dessen Hauptdurchströmungsrichtung (20) radial von außen nach innen verläuft, wobei der Zwischenboden (7) einen ersten Außenoberflächenabschnitt (13) aufweist, der konvex geformt ist den Umlenkkanal (12) zu begrenzen, wobei in dem Zwischenboden (7) mindestens ein Verbrauchsgasabführkanal (16) vorgesehen ist, der in den Umlenkkanal (12) mündet, so dass, wenn die Hauptdurchströmung (19) im Umlenkkanal (12) feste oder flüssige Teilchen (21) aufweist, durch den Verbrauchsgasabführkanal (16) Verbrauchsgas als teilchenarmes Gas einer Hauptdurchströmung (19) von dieser abführbar ist,
wobei die Radialturbomaschine (1) einen Rückführkanal (25) und ein Innengehäuse (6) aufweist, das derart geformt und angeordnet ist, dass das Innengehäuse (6) zusammen mit einem dritten Außenoberflächenabschnitt (15) des Zwischenbodens (7) den Rückführkanal (25) bildet, wobei in dem Rückführkanal (25) mindestens eine Leitschaufel (8) angeordnet ist, die den Rückführkanal (25) überbrückt,
**dadurch gekennzeichnet, dass**
der Verbrauchsgasabführkanal (16) von dem Zwischenboden (7) zu dem Innengehäuse (6) geführt ist.

2. Radialturbomaschine (1) gemäß Anspruch 1,
wobei der Zwischenboden (7) mit einem zweiten Außenoberflächenabschnitt (14) den Radialdiffusorkanal (11) und mit einem dritten Außenoberflächenabschnitt (15) den Rückführkanal (25) begrenzt, wobei der erste
Außenoberflächenabschnitt (13) bezogen auf die Hauptdurchströmungsrichtung (17-19) zwischen dem zweiten und dem dritten Außenoberflächenabschnitt (15, 16) angeordnet ist.

3. Radialturbomaschine (1) gemäß Anspruch 2,
wobei der Verbrauchsgasabführkanal (16) im Bereich des Übergangs zwischen dem ersten Außenoberflächenabschnitts (13) und dem dritten Außenoberflächenabschnitt (15) in den Umlenkkanal (12) mündet.

4. Radialturbomaschine (1) gemäß einem der Ansprüche 2 und 3,
wobei der Verbrauchsgasabführkanal (16) in dem Zwischenboden (7) in einer Ebene verläuft, in der die Achse des Zwischenbodens (7) liegt, und zur Achse des Zwischenbodens (7) zum dritten Außenoberflächenabschnitt (14) hin geneigt angeordnet ist.

5. Radialturbomaschine (1) mit vertikal angeordneter Rotationsachse (4),
wobei die Hauptströmungsrichtung der Radialturbomaschine von oben nach unten verläuft, aufweisend eine Verdichterstufe (2), die einen Zwischenboden (7) gemäß einem der Ansprüche 1 bis 4 aufweist.

6. Radialturbomaschine (1) gemäß Anspruch 1,
wobei sich der Verbrauchsgasabführkanal (16) in der Leitschaufel (8) in die Axialrichtung (4) erstreckt.

7. Radialturbomaschine (1) gemäß einem der Ansprüche 5 bis 6,
wobei der Verbrauchsgasabführkanal (16) auf der Schaufelsehne (24) und im Bereich höchster Profildicke der Leitschaufel (8) angeordnet ist.

8. Radialturbomaschine (1) gemäß einem der Ansprüche 5 bis 7,
wobei in jeder Leitschaufel (8) und dazugehörig in dem Zwischenboden (7) der Verbrauchsgasabführkanal (16) vorgesehen ist.

## Claims

1. Radial turbomachine (1) having a radial diffuser channel (11) with a diaphragm (7), the main flow direction (18) through which runs radially from the inside outward, a deflecting channel (12), which connects to the radial diffuser channel (11) downstream thereof and the main flow direction (19) through which is deflected from radially outward to radially inward, and a return flow channel (25), which connects to the deflecting channel (12) downstream thereof and the main flow direction (20) through which runs radially from the outside inward, wherein the diaphragm (7) has a first outer surface section (13) having a convex shape for delimiting the deflecting channel (12), wherein at least one consumption-gas removal channel (16), which opens into the deflecting channel (12), is provided in the diaphragm (7) so that, if the main flow (19) in the deflecting channel (12) contains solid or liquid particles (21), consumption gas can be removed as a low-particulate gas of a main flow (19) from said main flow through the consumption-gas removal channel (16), wherein the radial turbomachine (1) has a return flow channel (25) and an inner casing (6) which is shaped and arranged in such a way that the inner casing (6), together with a third outer surface section (15) of the diaphragm (7), forms the return flow channel (25), wherein at least one guide vane (8) is arranged in the return flow channel (25), which guide vane bridges the return flow channel (25), **characterized in that** the consumption-gas removal channel (16) is routed from the diaphragm (7) to the inner casing (6).

2. Radial turbomachine (1) according to Claim 1, wherein the diaphragm (7) delimits the radial diffuser channel (11) by means of a second outer surface section (14) and delimits the return flow channel (25) by means of a third outer surface section (15), wherein the first outer surface section (13) is arranged between the second and the third outer surface section (15, 16), relative to the main flow direction (17-19).

3. Radial turbomachine (1) according to Claim 2, wherein the consumption-gas removal channel (16) opens into the deflecting channel (12) in the region of the transition between the first outer surface section (13) and the third outer surface section (15).

4. Radial turbomachine (1) according to either of Claims 2 and 3, wherein the consumption-gas removal channel (16) runs in the diaphragm (7) in a plane in which the axis of the diaphragm (7) is situated, and is arranged relative to the axis of the diaphragm (7) so as to slope toward the third outer surface section (14).

5. Radial turbomachine (1) having a vertically arranged axis of rotation (4), wherein the main flow direction of the radial turbomachine runs from the top down, having a compressor stage (2), which has a diaphragm (7) according to one of Claims 1 to 4.

6. Radial turbomachine (1) according to Claim 1, wherein the consumption-gas removal channel (16) extends in the axial direction (4) in the guide vane (8).

7. Radial turbomachine (1) according to one of Claims 5 to 6, wherein the consumption-gas removal channel (16) is arranged on the vane chord (24) and in the region of the greatest profile thickness of the guide vane (8).

8. Radial turbomachine (1) according to one of Claims 5 to 7, wherein the consumption-gas removal channel (16) is provided in each guide vane (8) and correspondingly in the diaphragm (7).

## Revendications

1. Turbomachine ( 1 ) radiale comprenant un canal ( 11 ) de diffuseur radial ayant un fond ( 7 ) intermédiaire, dont le sens ( 18 ) principal d'écoulement s'étend radialement de l'intérieur à l'extérieur, un canal ( 12 ) de déviation qui se raccorde en aval du canal ( 11 ) de diffuseur radial à celui-ci et dont le sens ( 19 ) principal d'écoulement est dévié de radialement vers l'extérieur à radialement vers l'intérieur et un canal ( 25 ) de retour, qui se raccorde en aval du canal ( 12 ) de déviation à celui-ci et dont le sens ( 20 ) principal d'écoulement s'étend radialement de l'extérieur à l'intérieur, dans laquelle le fond ( 7 ) intermédiaire a une première partie ( 13 ) de surface extérieure qui est convexe pour délimiter le canal ( 12 ) de déviation, dans laquelle, dans le fond ( 7 ) intermédiaire, est prévu au moins un canal ( 16 ) d'évacuation du gaz consommé, qui débouche dans le canal ( 12 ) de déviation de manière à ce que, lorsque le courant ( 19 ) principal dans le canal ( 12 ) d'écoulement comporte des particules ( 21 ) solides ou liquides, du gaz consommé sous forme d'un gaz pauvre en particules d'un courant ( 19 ) principal est évacué de celui-ci par le canal ( 16 ) d'évacuation du gaz consommé, la turbomachine ( 1 ) radiale ayant un canal ( 25 ) de retour et une carcasse ( 6 ) intérieure qui est conformée et disposée de manière à ce que la carcasse ( 6 ) intérieure ensemble avec une troisième partie ( 15 ) de surface extérieure du fond ( 7 ) intermédiaire forment le canal ( 25 ) de retour au moins une aube ( 18 ) directrice qui empiète sur le canal ( 25 ) retour, étant montée dans le canal ( 25 ) de retour,
**caractérisée en ce que** le canal ( 16 ) d'évacuation du gaz consommé va du fond ( 7 ) intermédiaire à la carcasse ( 6 ) intérieure.

2. Turbomachine ( 1 ) radiale suivant la revendication 1, dans laquelle le fond ( 7 ) intermédiaire est délimité par une deuxième partie ( 14 ) de surface extérieure du canal ( 11 ) de diffuseur radial et par une troisième surface ( 15 ) de surface extérieure du canal ( 25 ) de retour, la première partie ( 13 ) de surface extérieure étant, par rapport au sens ( 17 à 19 ) principal d'écoulement, disposée entre la deuxième et la troisième partie ( 15, 16 ) de surface extérieure.

3. Turbomachine ( 1 ) radiale suivant la revendication 2, dans laquelle le canal ( 16 ) d'évacuation du gaz consommé débouche dans le canal ( 12 ) de déviation dans la région de la transition entre la première partie ( 13 ) de surface extérieure et la troisième partie ( 15 ) de surface extérieure.

4. Turbomachine ( 1 ) radiale suivant l'une des revendications 2 et 3,
dans laquelle le canal ( 16 ) d'évacuation du gaz consommé s'étend dans le fond ( 7 ) intermédiaire, dans un plan dans lequel passe l'axe du fond ( 7 ) intermédiaire, et est incliné par rapport à l'axe du fond ( 7 ) intermédiaire vers la troisième partie ( 14 ) de surface extérieure.

5. Turbomachine ( 1 ) radiale ayant un axe ( 4 ) de rotation disposé verticalement,
dans laquelle le sens principal d'écoulement de la turbomachine radiale va de haut en bas, en comportant un étage ( 2 ) de compresseur qui a un fond ( 7 ) intermédiaire suivant l'une des revendications 1 à 4.

6. Turbomachine ( 1 ) radiale suivant la revendication 1, dans laquelle le canal ( 16 ) d'évacuation du gaz consommé s'étend dans la direction ( 4 ) axiale dans l'aube ( 8 ) directrice.

7. Turbomachine ( 1 ) radiale suivant l'une des revendications 5 à 6,
dans laquelle le canal ( 16 ) d'évacuation du gaz consommé est disposé sur la corde ( 24 ) de l'aube et dans la région d'épaisseur de profil la plus grande de l'aube ( 8 ) directrice.

8. Turbomachine ( 1 ) radiale suivant l'une des revendications 5 à 7,
dans laquelle le canal ( 16 ) d'évacuation du gaz consommé est prévu dans chaque aube ( 8 ) directrice et dans le fond ( 7 ) intermédiaire qui lui est associé.
